# EUROPÄISCHE PATENTSCHRIFT

(11) **EP 2 678 181 B1**
(45) Veröffentlichungstag und Bekanntmachung des Hinweises auf die Patenterteilung: **26.11.2014**
(21) Anmeldenummer: 12700974.4
(22) Anmeldetag: 23.01.2012
(51) Int. Cl.: B60K 15/04, B60K 15/03, B62D 25/02

(54) **TANKMULDE**
TANK RECESS
GOULOTTE DE REMPLISSAGE DE RÉSERVOIR

(30) Priorität: 23.02.2011 DE 102011004556
(43) Veröffentlichungstag der Anmeldung: 01.01.2014
(73) Patentinhaber: Ford Global Technologies, LLC, Dearborn, MI 48126 (US)
(72) Erfinder: JAKOBS, Werner, 51467 Bergisch Gladbach (DE); PULCZYNSKI, Rafal, PL-32-050 Skawina (PL); BRANDT, Allen, 50733 Köln (DE)
(74) Vertreter: Dörfler, Thomas
(86) Internationale Anmeldenummer: PCT/EP2012/050976
(87) Internationale Veröffentlichungsnummer: WO 2012/113598

(56) Entgegenhaltungen:
- DE-A1- 19 805 715
- DE-A1-102008 017 687
- DE-A1-102010 015 033
- JP-A- 2005 199 769

## Beschreibung

Die Erfindung betrifft eine Tankmulde für Kraftfahrzeuge mit einem Muldenkörper mit Mitteln zur Befestigung an einer Karosserieöffnung von außen und mit einem Tankzuleitungsdichtungsabschnitt.

Es ist bekannt, bei Automobilen die Tankzuleitung des Kraftstofftanks in einer Tankmulde enden zu lassen, und die Tankzuleitung mittels eines Verschlusses zu verschließen. An der Tankmulde befindet sich ein Schwenklager für eine Tankklappe, die mit Hilfe eines Verriegelungs- oder Schlosssystems gesichert gehalten werden kann. Wird die Verriegelung aufgehoben, beispielsweise ein Querriegel aus einem Verriegelungsansatz herausgezogen, kann die Klappe geöffnet werden. Solche Tankmulden umfassen meist ein Durchgangsloch oder Stutzen für die Tankzuleitung, in den der Zapfhahn beim Tanken eingeschoben wird.

Für die Tankmulde kann ein wannenartiger Muldenkörper verwendet werden, der in einen Durchbruch in der Karosserie angeordnet wird. Dabei ist es aus offensichtlichen Gründen enorm wichtig, dass der Übergang zwischen Tankzuleitung und Muldenkörper gut abgedichtet ist. Zudem ist es ebenfalls wichtig, dass der Muldenkörper bzw. die Tankmulde nicht nur an der Karosserie befestigt, sondern auch gegenüber dieser abgedichtet ist. Hierbei ist nicht nur das Außenblech, sondern auch das Innenblech der Karosserie zu berücksichtigen.

Aus der gattungsbildenden DE 10 2010 015033 A1 ist eine Tankmulde für eine Karosserie eines Kraftwagens bekannt, mit einem umlaufenden Rahmenbereich und mit einem zumindest eine Öffnung für einen Tankstutzen aufweisenden Bodenbereich, wobei der Rahmenbereich und der Bodenbereich durch separate und zum Ausbilden der Tankmulde zusammengebaute Bauteile gebildet sind.

Aus der DE 198 05 715 A1 ist eine Vorrichtung an einem Kraftstoffsvstem eines Kraftfahrzeuges bekannt, bei der ein Einfüllende eines mit einem Kraftstoffbehälter verbundenen Kraftstoffrohres an der Karosserie des Fahrzeuges befestigt und über eine in einem Karosserieseitenteil angeordnete Tanköffnung erreichbar ist, wobei das Einfüllende an einem innerhalb des Karosserieseitenteiles befindlichen Karosserieelement befestigt ist, und dass das Karosserieelement einen um das Einfüllende angeordneten Schutz trägt, der in einem vorbestimmten Abstand von dem Karosserieseitenteil endet und eine solche Ausdehnung in der Richtung auf das Karosserieseitenteil hat, und bei einer Kollision das Einfüllende und ein darauf montierter Tankdeckel von dem Schutz geschützt werden.

Aus der DE 10 2008 017 687 A1 ist eine einteilige Tankmulde für Automobile mit einem Muldenkörper und einem Verbindungsteil bekannt. Der Muldentopf ist aus einem ersten Kunststoff, der an einem Ende einen Flansch zur Befestigung an einer Karosserieöffnung aufweist, und mit einem einteilig mit dem Muldenkörper geformten Bodenabschnitt bzw. Verbindungsteil aus einem zweiten Kunststoff, der weicher als der erste Kunststoff ist und eine Öffnung aufweist für die dichtende Aufnahme eines Einfüllrohrs aus relativ hartem Werkstoff. Ein Verstärkungsabschnitt ist einteilig am Verbindungsteil angeformt, das ebenfalls aus dem ersten Kunststoff besteht und der einer radialen und/oder Umfangsverformung des Verbindungsteils einen Widerstand entgegengesetzt. Das Verbindungsteil hat zwei Lippen, die mit einem Lochrand eines Innenblechs eines Automobils zusammenwirken, um eine Befestigung am Innenblech zu bewirken.

Es hat sich herausgestellt, dass es schwierig ist eine solche Tankmulde von außen zu montieren und dabei eine sichere Abdichtung zum Innenblech der Karosserie zu erreichen.

Der Erfindung liegt die Aufgabe zugrunde, eine Tankmulde zu schaffen, bei der ein geringerer Montageaufwand erforderlich ist und die Endmontage von außen vorgenommen werden kann.

Diese Aufgabe wird durch die in Anspruch 1 wiedergegebene Tankmulde gelöst.

Dadurch, dass der Muldenkörper einen umschlagbaren Dichtungsrand am Bodenabschnitt derart aufweist, dass ein Flansch am Innenblech der Karosserieöffnung vom umschlagbaren Dichtungsrand derart umgriffen wird, dass dieser in der Einbaulage dichtend um den Flansch der Karosserieöffnung legbar ist, kann eine einfache Montage und Abdichtung erreicht werden. Der Muldenkörper wird in bekannter Weise von außen in die Karosserieöffnung eingesetzt und befestigt. Anschließend kann der Dichtungsrand aus seiner gestreckten Einbaustellung in seine dichtende Endlage umgeschlagen werden.

Der Flansch kann einerseits durch das Innenblech der Karosserie selbst oder durch ein vom Muldenkörper separates Verbindungsteil ausgebildet werden. Dann wird dieses Teil zuerst von innen an der Karosserieöffnung befestigt und anschließend wie oben erläutert verfahren.

Wenn zwischen dem Bodenabschnitt und dem umschlagbaren Dichtungsrand der Tankzuleitungsdichtungsabschnitt angeordnet ist, kann das Tankzuleitungsrohr bzw. der Einfüllstutzen ebenfalls in einfacher Weise mit dem Dichtabschnitt des Muldenkörpers verbunden werden.

Erfindungsgemäß können in einem Verfahren zur Montage einer Tankmulde an einer Karosserieöffnung eines Kraftfahrzeugs die folgenden Schritte ausgeführt werden:
- Ausbilden eines Flansches am Innenblech der Karosserieöffnung;
- Befestigen eines Muldenkörpers von außen an der Karosserieöffnung (unter Einführung des Bodenabschnitts samt Dichtungsrand in die Karosserieöffnung) und
- Umschlagen eines Dichtungsrands am Bodenabschnitt des Muldenkörpers über den Flansch in abdichtender Weise.

Beim Befestigen des Muldenkörpers von außen an der Karosserieöffnung unter Einführung des Bodenabschnitts samt Dichtungsrand in die Karosserieöffnung wird also der Dichtungsrand in einer gestreckten Einbaustellung durch die Karosserieöffnung hindurch geführt, so dass er anschließend in seine dichtende Endlage umgeschlagen werden kann. Dies kann in einfacher Weise von außen mittels Hand und Finger (oder einem geeigneten Werkzeug) erfolgen. Es sind keine komplizierten oder aufwendigen Arbeiten mehr notwendig.

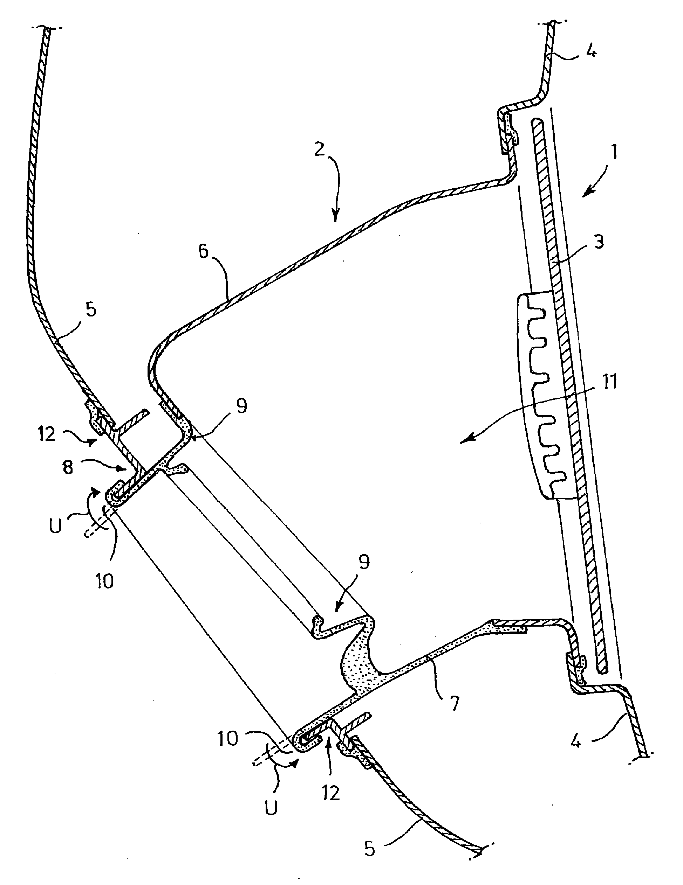

Weitere Einzelheiten, Merkmale und Vorteile der Erfindung ergeben sich aus der nachfolgenden Beschreibung eines Ausführungsbeispiels anhand der einzigen Zeichnung, in der ein schematischer Schnitt durch eine Tankmulde 1 gezeigt ist.

Die Tankmulde 1 umfasst einen im Schnitt etwa U-förmigen Muldenkörper 2, der einen auf- und zuschwenkbaren Tankdeckel 3 aufweist. Der Muldenkörper 2 wird von außen am Außenblech 4 einer Karosserieöffnung 11 befestigt und erstreckt sich nach innen entlang der Karosserieöffnung 11 zum Innenblech 5.

Der Muldenkörper 2 umfasst einen ersten Bereich 6 mit einer Wandung aus steiferem Kunststoff und einen sich daran anschließenden Bodenabschnitt 7 aus einem weicheren Kunststoff, der angespritzt ist. Der Bodenabschnitt 7 weist am unteren Ende, d.h. im Bereich des Innenblechs 5 der Karosserieöffnung 11 einen weichen, gummielastischen und schlauchartigen Dichtungsrand 10 auf.

Dieser ist ausgestaltet, um einen umlaufenden Flansch 8 in der Endstellung dichtend zu umgreifen. Der Flansch wird dabei vorliegend von einem separaten Verbindungsteil 12 ausgebildet, das an der Karosserieöffnung 11 am Innenblech 5 von innen befestigt ist und eine Dichtung zum Innenblech 5 ausbildet. Der Flansch 8 ist also am Durchbruch der Karosserieöffnung am Innenblech 5 umlaufend ausgebildet und erstreckt sich etwa in Längsrichtung der Karosserieöffnung 11 ins Fahrzeuginnere.

Zwischen ersten Bereich 6 und Dichtungsrand 10 des Muldenkörpers 2 ist eine Tankzuleitungsrohrdichtung 9 ausgebildet, die nach innen einkragt bzw. hervorsteht, um später das nicht dargestellte Tankzuleitungsrohr dichtend aufzunehmen.

Um die Tankmulde 1 zu montieren wird zunächst von innen das Verbindungsteil 12 in die Karosserieöffnung 11 am Innenblech 5 zur Ausbildung des Flansches 8 befestigt.

Später wird dann von außen der Muldenkörper 2 am Außenblech 4 der Karosserieöffnung 11 eingesetzt und befestigt. Dabei wird der Dichtungsrand 10 in einer "gestreckten" Einbaustellung (gestrichelte Linien in der Figur) in die Karosserieöffnung 11 so eingeführt, das der Dichtungsrand 10 die Karosserieöffnung 11 auch am Innenblech 5 durchgreift und über den Flansch 8 hinaussteht.

Anschließend kann von außen z.B. mit dem Finger der Dichtungsrand 10 am Flansch 8 zur Abdichtung umlaufend in Richtung des Pfeils U in eine Endstellung umgeschlagen werden (durchgezogene Linien in der Figur). Durch die elastische Spannung des umgeschlagenen Dichtungsrandes 10 liegt dieser eng und damit dichtend und festsitzend am Flansch 8 an.

### Bezugszeichenliste

- 1: Tankmulde
- 2: Muldenkörper
- 3: Tankdeckel
- 4: Außenblech
- 5: Innenblech
- 6: erster Bereich
- 7: Bodenabschnitt
- 8: Flansch
- 9: Tankzuleitungsrohrdichtung
- 10: Dichtungsrand
- 11: Karosserieöffnung
- 11: Karosserieöffnung
- 12: Verbindungsteil

## Patentansprüche

1. Tankmulde (1) für Kraftfahrzeuge mit einem Muldenkörper (2) mit Mitteln zur Befestigung an einer Karosserieöffnung (11) von außen, und mit einem Tankzuleitungsdichtungsabschnitt (9),
**dadurch gekennzeichnet, daß**
der Muldenkörper (2) einen umschlagbaren, schlauchartig ausgebildeten Dichtungsrand (10) am Bodenabschnitt (7) derart aufweist, dass ein Flansch (8), der sich etwa in Längsrichtung der Karosserieöffnung (11) ins Fahrzeuginnere erstreckt, am Innenblech (5) der Karosserieöffnung (11) vom umschlagbaren Dichtungsrand (10) derart umgriffen wird, dass dieser in der Einbaulage dichtend um den Flansch (8) der Karosserieöffnung legbar ist.

2. Tankmulde nach Anspruch 1,
**dadurch gekennzeichnet, daß**
der Flansch (8) als Teil des Innenblechs (5) ausgebildet ist.

3. Tankmulde nach Anspruch 1,
**dadurch gekennzeichnet, daß**
der Flansch (8) durch ein vom Muldenkörper (2) separates Verbindungsteil (12) aus gebildet ist.

4. Tankmulde nach einem der vorhergehenden Ansprüche,
**dadurch gekennzeichnet, daß**
zwischen dem Bodenabschnitt (7) und dem umschlagbaren Dichtungsrand (10) der Tankzuleitungsdichtungsabschnitt (9) angeordnet ist.

5. Verfahren zur Montage einer Tankmulde (1), insbesondere nach einem der vorhergehenden Ansprüche, an einer Karosserieöffnung ills eines Kraftfahrzeugs umfassend die Schritte:
- Ausbilden eines Flansches (8) am Innenblech (5) der Karosserieöffnung (11), der sich etwa in Längsrichtung der Karosserieöffnung (11) ins Fahrzeuginnere erstreckt;
- Befestigen eines Muldenkörpers (2) von außen an der Karosserieöffnung (11) und
- Umschlagen eines schlauchartig ausgebildeten Dichtungsrands (10) am Bodenabschnitt des Muldenkörpers (2) über den Flansch (8) in abdichtender Weise.

6. Verfahren nach Anspruch 5, **dadurch gekennzeichnet, dass** der Flansch durch Umformung des Innenblechs ausgebildet wird.

7. Verfahren nach Anspruch 5, **dadurch gekennzeichnet, dass** der Flansch durch Befestigung eines den Flansch aufweisenden Verbindungsteils ausgebildet wird.

## Claims

1. Tank recess (1) for motor vehicles comprising a recess body (2) having means for fastening to a vehicle body opening (11) from outside and having a tank feed line sealing portion (9),
**characterized in that** the recess body (2) has a fold-over sealing edge (10) in tubular form on the base portion (7), such that a flange (8), which extends approximately in the longitudinal direction of the vehicle body opening (11) into the vehicle interior, on the inner metal plate (5) of the vehicle body opening (11) is encompassed by the fold-over sealing edge (10), such that in the installed position said sealing edge is able to be placed sealingly around the flange (8) of the vehicle body opening.

2. Tank recess as claimed in Claim 1,
**characterized in that** the flange (8) is formed as part of the inner metal plate (5).

3. Tank recess as claimed in Claim 1,
**characterized in that** the flange (8) is formed by a connecting part (12) which is separate from the recess body (2).

4. Tank recess as claimed in one of the preceding claims,
**characterized in that** the tank feed line sealing portion (9) is arranged between the base portion (7) and the fold-over sealing edge (10).

5. Method for mounting a tank recess (1), in particular as claimed in one of the preceding claims, to a vehicle body opening (11) of a motor vehicle, comprising the steps:
- forming a flange (8), which extends approximately in the longitudinal direction of the vehicle body opening (11) into the vehicle interior, on the inner metal plate (5) of the vehicle body opening (11);
- fastening a recess body (2) from outside onto the vehicle body opening (11) and
- folding over a sealing edge (10) in tubular form on the base portion of the recess body (2) over the flange (8) in a sealed manner.

6. Method as claimed in Claim 5, **characterized in that** the flange is formed by shaping the inner metal plate.

7. Method as claimed in Claim 5, **characterized in that** the flange is formed by fastening a connecting part comprising the flange.

## Revendications

1. Goulotte de remplissage de réservoir (1) pour véhicules automobiles, comprenant un corps de goulotte (2) pourvu de moyens de fixation à une ouverture de carrosserie (11) depuis l'extérieur, et comprenant une portion d'étanchéité de conduite d'alimentation de réservoir (9),
**caractérisée en ce que**
le corps de goulotte (2) comprend un bord d'étanchéité tubulaire rabattable (10) sur la portion de fond (7), de telle sorte qu'une bride (8), qui s'étend approximativement dans la direction longitudinale de l'ouverture de carrosserie (11) dans l'intérieur du véhicule, sur la tôle intérieure (5) de l'ouverture de carrosserie (11) soit entourée par le bord d'étanchéité rabattable (10), de telle sorte que celui-ci puisse être placé de manière étanche autour de la bride (8) de l'ouverture de carrosserie dans la position d'installation.

2. Goulotte de remplissage de réservoir selon la revendication 1,
**caractérisée en ce que**
la bride (8) est formée en tant que partie de la tôle intérieure (5).

3. Goulotte de remplissage de réservoir selon la revendication 1,
**caractérisée en ce que**
la bride (8) est formée par une partie de liaison (12) séparée du corps de goulotte (2).

4. Goulotte de remplissage de réservoir selon l'une quelconque des revendications précédentes,
**caractérisée en ce que**
la portion d'étanchéité de conduite d'alimentation de réservoir (9) est disposée entre la portion de fond (7) et le bord d'étanchéité rabattable (10).

5. Procédé de montage d'une goulotte de remplissage de réservoir (1), en particulier selon l'une quelconque des revendications précédentes, sur une ouverture de carrosserie (11) d'un véhicule automobile, comportant les étapes suivantes :
- formation d'une bride (8) sur la tôle intérieure (5) de l'ouverture de carrosserie (11), laquelle bride s'étend approximativement dans la direction longitudinale de l'ouverture de carrosserie (11) dans l'intérieur du véhicule ;
- fixation d'un corps de goulotte (2) depuis l'extérieur à l'ouverture de carrosserie (11) et
- rabattement d'un bord d'étanchéité tubulaire (10) sur la portion de fond du corps de goulotte (2) par-dessus la bride (8) d'une manière étanche.

6. Procédé selon la revendication 5, **caractérisé en ce que** la bride est formée par façonnage de la tôle intérieure.

7. Procédé selon la revendication 5, **caractérisé en ce que** la bride est formée par fixation d'une partie de liaison comprenant la bride.
